# EUROPÄISCHE PATENTSCHRIFT

(11) **EP 0 830 188 B1**
(45) Veröffentlichungstag und Bekanntmachung des Hinweises auf die Patenterteilung: **16.05.2001**
(21) Anmeldenummer: 96941616.3
(22) Anmeldetag: 28.11.1996
(51) Int. Cl.: B23K 26/06

(54) **LASERGRAVURANLAGE**
LASER ENGRAVING SYSTEM
PROCEDE DE GRAVURE AU LASER

(30) Priorität: 29.11.1995 DE 19544502
(43) Veröffentlichungstag der Anmeldung: 25.03.1998
(73) Patentinhaber: Baasel-Scheel Lasergraphics GmbH, 25524 Itzehoe (DE)
(72) Erfinder: SIEVERS, Wolfgang, D-25569 Kremperheide (DE)
(74) Vertreter: Klunker . Schmitt-Nilson . Hirsch
(86) Internationale Anmeldenummer: EP9605277
(87) Internationale Veröffentlichungsnummer: WO9719783

(56) Entgegenhaltungen:
- WO-A-93/25387
- DE-A- 3 714 504
- DE-A- 4 212 390
- US-A- 4 947 023
- US-A- 5 379 059

## Beschreibung

Die Erfindung betrifft eine Lasergravuranlage zum Gravieren einer Werkstückoberfläche, mit einer ersten Laserstrahlquelle, einem im Strahlengang der ersten Laserstrahlquelle liegenden Modulator, einer dem Modulator nachgeordnete Optik, die mit Abstand von der Werkstückoberfläche angeordnet ist, wobei Optik und Werkstück relativ zueinander bewegt werden, einer Steuereinrichtung, die den Modulator mit einem ersten Steuersignal ansteuert, so daß dessen auf die Werkstückoberfläche auftreffende Ausgangsstrahlung nach Maßgabe des ersten Steuersignals moduliert ist und die Werkstückoberfläche entsprechend tief bearbeitet und einer zweiten Laserstrahlquelle, die von der Steuereinrichtung mit einem zweiten Steuersignal angesteuert wird.

Solche Lasergravuranlagen sind bekannt. Die Laserstrahlquelle besteht typischerweise aus einem CO₂-Laser, der von der Steuereinrichtung mit einem Steuersignal angesteuert wird, welches von dem gewünschten Bearbeitungsprofil der Werkstückoberfläche abhängt. Die Werkstückoberfläche wird relativ zu der Optik bewegt. Typischerweise handelt es sich bei dem Werkstück um eine Walze aus beispielsweise Gummi oder Kunststoff, die in eine Lasergravuranlage eingespannt wird, wo sie gedreht und gleichzeitig parallel zu ihrer Drehachse translatorisch verfahren wird, so daß der von der Optik auf die Werkstückoberfläche fokussierte Laserstrahl die Werkstückoberfläche abtastet und abhängig von dem Steuersignal durch entsprechend große Strahlintensität die Werkstückoberfläche mehr oder weniger tief abträgt.

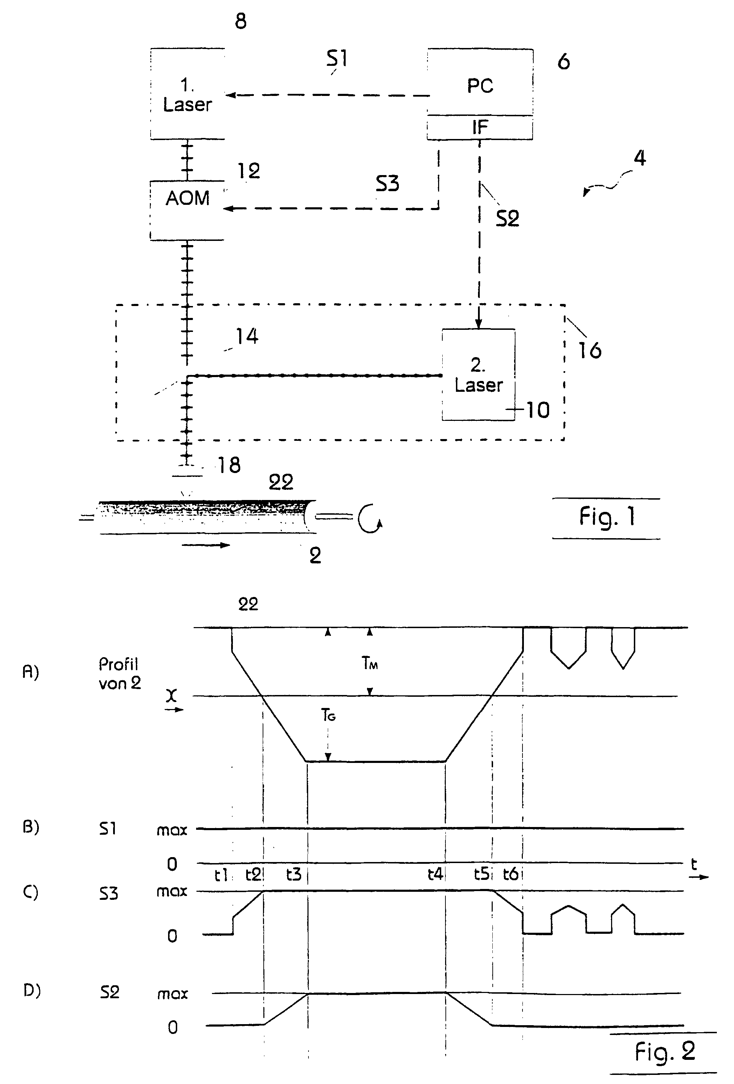

Fig. 1 zeigt eine Lasergravuranlage, die teilweise dem Stand der Technik entspricht.

Bei dem Werkstück 2 handelt es sich um eine Walze aus Gummi oder mit einer Gummioberfläche 22. Das Werkstück 2 wird gemäß Pfeilrichtung gedreht und translatorisch bewegt.

Eine feststehend ausgebildete Lasergravuranlage 4 enthält als Steuereinrichtung und Signalgenerator einen PC (personal computer) mit einer Schnittstelle (IF = interface). Die Steuereinrichtung 6 liefert an einem ersten CO₂-Laser 8 ein Steuersignal 1, welches den ersten Laser 8 veranlaßt, eine Ausgangslaserstrahlung auf einen akustooptischen Modulator 12 zu geben, wobei diese Ausgangslaserstrahlung des ersten Lasers 8 linear polarisiert ist und eine sich nicht ändernde Amplitude aufweist.

Über die Schnittstelle IF der Steuereinrichtung 6 wird an den akustooptischen Modulator 12 ein Steuersignal S3 gegeben, welches den Modulator 12 dazu bringt, den von dem ersten Laser 8 kommenden Laserstrahl entsprechend den Signalschwankungen des Steuersignals S3 so zu modulieren, daß der Ausgangs-Laserstrahl des akustooptischen Modulators 12 Intensitätsschwankungen aufweist, die dem Steuersignal S3 entsprechen.

Aufbau und Verwendung des akustooptischen Modulators 12 sind im Prinzip bekannt. Typischerweise handelt es sich um ein Kristall und ein piezoelektrisches Element, so daß beim Ansteuern des piezoelektrischen Elements akustische Wellen durch den Kristall gesendet werden, welche dessen optische Eigenschaften beeinflussen. Der den Modulator durchlaufende Laserstrahl wird abhängig von der Frequenz der akustischen Welle gebeugt, d.h., die Leistung oder Intensität des Ausgangsstrahls des Modulators 12 wird moduliert. Wobei der aus dem Modulator austretende Arbeitsstrahl 1 der Strahl der ersten Beugungsordnung des Modulators ist.

Der Ausgangslaserstrahl des akustooptischen Modulators 12 gelangt über eine Optik 18, wo die Strahlung gebündelt wird, auf die Werkstückoberfläche 22.

Abhängig von dem Steuersignal S3 verändert sich also die Leistung des auf die Werkstückoberfläche 22 auftreffenden Laserstrahls, und da dieser Laserstrahl die Werkstückoberfläche 22 mit konstanter Geschwindigkeit überstreicht, entsteht ein dem Steuersignal S3 entsprechendes Profil in der Werkstückoberfläche 22. Hohe Strahlleistung ergibt eine große Bearbeitungstiefe, geringere Strahlleistung, nur eine geringe Bearbeitungstiefe.

Eine Lasergravuranlage der eingangs genannten Art, wie sie aus der DE 42 12 390 A1 bekannt ist, ist so aufgebaut, daß die beiden von den Laserstrahlquellen kommenden Laserstrahlen vor dem Werkstück über getrennte optische Wege so auf die Werkstückoberfläche gerichtet werden, daß dort ein durch exakte Überlappung mehrerer Strahlen konzentrierter Strahlfleck entsteht, oder aber ein mehrteiliger Strahlfleck, bei dem mehrere Teilstrahlen teilweise überlappend oder überhaupt nicht überlappend in einem bestimmten Muster kombiniert sind. Aus der US 4 947 023 ist eine Lasergravuranlage bekannt, bei der zwei Laserstrahlen in einem Teilbereich ihres jeweiligen optischen Wegs vor der Optik koaxial geführt werden. Hierdurch soll eine doppelte Gravurtiefe im Werkstück erreicht werden, falls beide Laser bei dem Arbeitsvorgang eingeschaltet sind.

Aus der DE 37 14 504 A1 ist eine Lasergravuranlage bekannt, bei der zwei Laser mit unterschiedlichen Wellenlängen verwendet werden. Die beiden Laserstrahlen unterschiedlicher Wellenlänge werden auf einem Bearbeitungsfleck zusammengeführt.

Eine Lasergravuranlage gemäß dem Oberbegriff des Anspruchs 1 ist allgemein bekannt. Dabei wird mit Hilfe der Steuereinrichtung 6 der Betrieb des ersten Lasers 8 direkt moduliert, um das gewünschte Bearbeitungsprofil auf der Werkstückoberfläche 22 zu erhalten. Allerdings besitzt ein typischer CO₂-Laser eine maximale Modulationsfrequenz im Kilohertz-Bereich, was eine rasche Bearbeitung von Werkstückoberflächen zumindest dann verbietet, wenn das gewünschte Profil sehr feine Strukturen besitzt.

Durch die Verwendung des akustooptischen Modulators ist eine raschere und feinere Bearbeitung der Werkstückoberfläche möglich; denn die typischen akustooptischen Modulatoren haben eine maximale Modulationsfrequenz im Megahertz-Bereich.

Allerdings ist der Einsatz der akustooptischen Modulatoren beschränkt; denn mit einem solchen Modulator läßt sich üblicherweise nur ein Laserstrahl mit einer Leistung von maximal 100 Watt modulieren. Nun ist es aber bei vielen Anwendungsfällen, beispielsweise beim Gradieren von Druckwalzen, unerläßlich, eine bestimmte Profiltiefe zu erreichen. Bei einer gegebenen Leistungs-Obergrenze durch den Modulator und bei einer gegebenen Mindest-Profiltiefe am Boden des in der Werkstückoberfläche 22 ausgebildeten Profils ist folglich die Bearbeitungsgeschwindigkeit beschränkt, da zur Erzielung der geforderten Profiltiefe in der Werkstückoberfläche eine bestimmte Mindestenergie in die Werkstückoberfläche über den Laserstrahl eingebracht werden muß. Hieraus folgt, daß der eine maximale Leistung besitzende Laserstrahl nur relativ langsam über die Werkstückoberfläche gefahren werden kann.

Der Erfindung liegt die Aufgabe zugrunde, eine Lasergravuranlage der eingangs genannten Art anzugeben, bei der bei schneller Bearbeitung der Werkstückoberfläche einerseits feine Konturen gebildet werden können und andererseits eine bestimmte Profil-Mindesttiefe erreicht wird.

Gelöst wird diese Aufgabe erfindungsgemäß mit einer Lasergravuranlage gemäß Anspruch 1.

Die zum Ansteuern der Laserstrahlquellen verwendeten Steuersignale besitzen nicht Rechteck-Form, sondern schräge Signalflanken, d.h. sie ändern ihren Pegel zwischen maximalem und minimalem Wert allmählich. Lediglich zur Ausbildung der Ränder von feinen Strukturen erfolgt eine rasche Änderung des Signalpegels des ersten Steuersignals für den Modulator, so daß sich die Ausgangslaserstrahlung des Modulators ebenfalls sprunghaft ändert. Durch derart modulierte Laserstrahlen lassen sich feine Konturen in der Werkstückoberfläche bilden. Wenn dann der Laserstrahl weiter über die Werkstückoberfläche geführt wird, erhöht sich die Leistung des Laserstrahls, so daß das erzeugte Profil in der Werkstückoberfläche entsprechend tiefer wird. Während der erste Teil eines gravierten Bereichs ausschließlich von dem von dem Modulator abgegebenen Laserstrahl gebildet wird, kommt anschließend der von der zweiten Laserstrahlquelle kommende Laserstrahl hinzu. Durch diesen zusätzlichen Laserstrahl wird die Gesamtleistung des auf der Werkstückoberfläche auftreffenden Laserstrahls größer, vorzugsweise um ein Mehrfaches größer, als die Leistung, die nur von dem Ausgangslaserstrahl des Modulators geliefert wird.

Während die feinen Konturen durch die relativ hohe Modulationsfrequenz des akustooptischen Modulators erzeugt werden, werden die tiefen Bereiche des gewünschten Profils durch Zuschaltung der zweiten Laserstrahlquelle gebildet. Da die tiefen Bereiche nur in solchen Abschnitten des Profils erzeugt werden müssen, die - betrachtet entlang der Abtastlinie auf der Werkstückoberfläche - relativ lang sind, reicht die im Kilohertz-Bereich liegende maximale Modulationsfrequenz für die zweite Laserlichtquelle aus.

Durch die erfindungsgemäße Maßnahme wird also einerseits die hohe maximale Modulationsfrequenz eines akustooptischen Modulators ausgenutzt, und andererseits wird dessen Beschränkung durch die maximale Laserleistung kompensiert durch Zuschaltung der zweiten Laserstrahlquelle, wenn tiefe Bereiche des Profils erzeugt werden müssen.

Grundsätzlich läßt sich die Erfindung mit zwei getrennten Lasem, beispielsweise CO₂-Lasern realisieren. In einer praktischen Ausführungsform wird ein Laser mit zwei Laserröhren verwendet, wobei die eine Laserröhre einen Laserstrahl mit gleichbleibender Amplitude liefert, während der Laserstrahl der anderen Laserröhre über den akustooptischen Modulator geführt wird.

Eine in der Praxis besonders günstige Ausführungsform erhält man dann, wenn die von der ersten und der zweiten Laserstrahlquelle gelieferten Laserstrahlen senkrecht zueinander linear polarisiert sind. Der erste linear polarisierte Laserstrahl wird auf den akustooptischen Modulator gegeben und von diesem mit hoher Modulationsfrequenz moduliert. Der Ausgangslaserstrahl des Modulators wird auf einen relativen Spiegel gegeben, der unter einem Winkel von 45° im Strahlengang angeordnet ist. Der Polarisationsvektor dieses von dem Modulator kommenden Laserstrahls hat einen Winkel von etwa 45° zur Spiegeloberfläche, auf die der Laserstrahl auftrifft. Der Laserstrahl wird von dem Spiegel durchgelassen (transmittiert). Der andere Laserstrahl, der einen zu dem erstgenannten Polarisationsvektor senkrechten Polarisationsvektor besitzt, trifft von der anderen Seite auf den Spiegel, wobei sein Polarisationsvektor parallel zu der betreffenden Spiegeloberfläche verläuft. Hierdurch wird dieser Laserstrahl von der zweiten Laserstrahlquelle vom Spiegel reflektiert. Der transmittierte und der reflektierte jeweils linear polarisierte Laserstrahl kombinieren sich zu einem gemeinsamen Laserstrahl, welcher auf die Optik gelangt und von dieser auf die Werkstückoberfläche gebündelt wird.

In an sich bekannter Weise besteht die Steuereinrichtung einer solchen Lasergravuranlage hauptsächlich aus einem PC (personal computer) und einer dazugehörigen Schnittstelle (IF = interface). In einem Speicher sind Daten des Soll-Profils gespeichert, welches die gravierte Werkstückoberfläche erhalten soll. Diese Daten werden von dem PC zu einem Steuersignal verarbeitet, daß ist ein sich zeitlich zwischen zwei Pegeln änderndes Signal, wobei der Signalpegel grundsätzlich dem Sollprofil entlang der Abtastlinie auf der Werkstückoberfläche entspricht. Dieses Steuersignal wird nun erfindungsgemäß aufgeteilt in das erste Steuersignal, welches dem akustooptischen Modulator zugeführt wird, und das zweites Steuersignal, welches der zweiten Laserstrahlquelle zugeführt wird. Da die von dem Modulator abgegebene Laserleistung ebenso wie die von der zweiten Laserstrahlquelle abgegebene Laserleistung im wesentlichen proportional ist zu dem Amplitudenverlauf des betreffenden Steuersignals, ergibt die Summe des ersten und des zweiten Steuersignals das von dem PC zunächst bereitgestellte Steuersignal. Mit anderen Worten: das erste und das zweite Steuersignal ergeben sich durch geeignete subtraktive Auftrennung des von dem PC erzeugten Steuersignals.

Bei dem Modulator kann es sich vorzugsweise um einen dem Laser nachgeordneten akusto-optischen Modulator handeln. Eine ähnliche Wirkungsweise erzielt man jedoch auch dann wenn ein anderer Modulator verwendet wird. Man kann auch mit Hilfe eines Güteschalters im Laser-Resonator die gewünschte Modulation des Laserlichts zum Bearbeiten der Werkstückoberfläche erreichen.

Die erste Laserstrahlquelle und die zweite Laserstrahlquelle müssen nicht notwendigerweise Laserlicht gleicher Wellenlänge erzeugen. Man kann auch mit unterschiedlichen Wellenlängen für den ersten und den zweiten Laser arbeiten. In diesem Fall wird dann vor der Optik der Lasergravuranlage ein wellenlängen-selektiver Spiegel angeordnet.

Im folgenden werden Ausführungsbeispiele der Erfindung anhand der Zeichnung näher erläutert. Es zeigen:
- **Fig. 1**: eine schematische Skizze einer Lasergravuranlage;
- **Fig. 2**: Impulsdiagramme mehrerer Steuersignalverläufe in Verbindung mit einem dazu korrespondierenden Profil einer Werkstückoberfläche,
- **Fig. 3**: eine schematische Darstellung einer weiteren Ausführungsform einer Lasergravuranlage gemäß der Erfindung, und
- **Fig. 4**: eine schematische Darstellung einer gegenüber Fig. 3 modifizierten Ausführungsform.

Die in Fig. 1 dargestellte erfindungsgemäße Lasergravuranlage 4 enthält die bereits oben erläuterten Komponenten einer bekannten Lasergravuranlage, nämlich eine Steuereinrichtung 6, bestehend aus einem PC und einer Schnittstelle (IF), einen ersten Laser 8, einem akustooptischen Modulator 12 und einer Optik 18, die den Ausgangslaserstrahl des akustooptischen Modulators (AOM) 12 auf eine Werkstückoberfläche 22 eines Werkstücks 2 bündelt, bei dem es sich hier um eine zu gravierende Gummiwalze handeln soll.

In Fig. 1 ist durch eine strichpunktierte Linie ein Zusatzteil dargestellt, welches hier als Tiefengravurzusatzteil 16 bezeichnet werden soll. Das Tiefengravurzusatzteil enthält einen selektiven Spiegel 14 und einen zweiten Laser 10.

Die Steuereinrichtung 6 liefert ein Steuersignal S1 an den ersten Laser 8, so daß dieser einen Laserstrahl mit linearer Polarisierung und gleichbleibender Leistung auf den akustooptischen Modulator 12 gibt. Dieser empfängt von der Steuereinrichtung 6 ein Steuersignal S3, welches die Feinkonturen des gewünschten Soll-Profils der Werkstückoberfläche 22 definiert. Der ebenfalls linear polarisierte Ausgangslaserstrahl des akustooptischen Modulators 12 wird von dem selektiven Spiegel 14 durchgelassen und gelangt über die Optik 18 auf die Werksrückoberfläche 22.

Der zweite Laser 10 erhält von dem PC 6 ein Steuersignal S2 und liefert einen Laserausgangsstrahl, der linear polarisiert ist, wobei aber der Polarisationsvektor des von dem zweiten Laser 10 abgegebenen Laserstrahls senkrecht auf den Polarisationsvektor des von dem Modulator 12 gelieferten Laserstrahls steht. Aufgrund der in Fig. 1 durch Striche bzw. Punkte angedeuteten Polarisationsvektoren läßt der selektive Spiegel 14 den von dem Modulator 12 abgegebenen Laserstrahl durch und reflektiert den von dem zweiten Laser 10 gelieferten Laserstrahl, so daß sich beide Laserstrahlen, die aufeinander senkrecht stehende Polarisationsvektoren besitzen, in einem gemeinsamen Strahlengang vereinen und über die Optik 18 auf die Werkstückoberfläche 22 gelangen.

Während das Steuersignal S1 und demzufolge auch der Ausgangslaserstrahl des ersten Lasers 8 eine konstante Amplitude bzw. Leistung besitzt, haben das erste Steuersignal S2 und das zweite Steuersignal S2 einen zeitlichen Verlauf, der zu dem Soll-Profil entlang der Abtastlinie des Laserstrahls auf der Werkstückoberfläche 22 korrespondiert. Die Leistung der jeweiligen Laserstrahlen, die von dem Modulator 12 bzw. den zweiten Laser 10 abgegeben werden, ist praktisch proportional zur Amplitude der Steuersignale S3 bzw. S2.

In Fig. 2 ist bei A) das Profil des Werkstücks 2 in dessen Werkstückoberfläche 22 dargestellt. Natürlich hängt der Verlauf des Profils entlang der Abtastlinie des Laserstrahls auf der Werkstückoberfläche zusammen mit der Abtastgeschwindigkeit, mit der sich der Laserstrahl über die Werkstückoberfläche bewegt. Somit entspricht die örtliche Änderung des Profils in der Werkstückoberfläche 22 der zeitlichen Änderung des (ersten) Steuersignals S3, welches dem akustooptischen Modulator 12 zugeführt wird, und des (zweiten) Steuersignals S2, welches von der Steuereinrichtung 6 dem zweiten Laser 10 zugeführt wird. Die Steuersignale S1, S3 und S2 sind in Fig. 2 bei B), C) bzw. D) dargestellt.

Durch den oben angesprochenen Zusammenhang zwischen dem Verlauf des Profils entlang der Abtastlinie des Laserstrahls auf der Werkstückoberfläche 22 und dem zeitlichen Verlauf der Steuersignale, insbesondere der Steuersignale S3 und S4, können hier einzelne Stellen des in Fig. 2A) dargestellten Profils in Beziehung gesetzt werden zu Zeitpunkten T₁ - T₆ während des Verlaufs der Steuersignale.

Das dem ersten Laser 8 zugeführte Steuersignal S1 hat gleichbleibende (maximale) Amplitude, so daß der Laser 8 an den akustooptischen Modulator 12 einen Laserstrahl mit gleichbleibender Leistung liefert.

Es soll im folgenden der Verlauf des ersten Steuersignals S3 (Fig. 2C) betrachtet werden, der dein akustooptischen Modulator 12 zugeführt wird. Zu einem Zeitpunkt tl springt der Pegel des Steuersignals S3 auf einen gewissen Wert, und durch die damit einhergehende sprunghafte Zunahme der Leistung des von dem Modulator 12 abgegebenen Laserstrahls erfolgt die Ausbildung einer steilen Stufe in der Werkstückoberfläche 22. Zwischen den Zeitpunkten t₁ und t₂ nimmt der Pegel des Steuersignals S3 allmählich auf einen Maximalwert zu, und dementsprechend nimmt die Tiefe des Profils in Bezug auf die Werkstückoberfläche 22 allmählich zu. In dem Zeitpunkt t₁, in welchem der maximale Pegel des Steuersignals S3 und mithin die maximale Leistung des von dem akustooptischen Modulator 12 gelieferten Laserstrahls erreicht ist, beginnt der Pegel des Steuersignals S2 anzusteigen. Entsprechend der Summe der Pegel der Steuersignale S2 und S3 nimmt die Leistung der durch den selektiven Spiegel 14 vereinten Laserstrahlen auf der Werkstückoberfläche zu, so daß die Profiltiefe gesteigert wird. Zu einem Zeitpunkt t₃ erreicht der Pegel des Steuersignals S2 seinen Maximalwert. Dies entspricht der maximalen Profiltiefe T_{G}. Diese Gesamtprofiltiefe T_{G} resultiert aus der Summe der Maximalamplituden der beiden Steuersignale S2 und S3.

Im Zeitpunkt t₁ beginnt der Pegel des Steuersignals S2 zu sinken, und dementsprechend nimmt die Tiefe des Profils in der Werkstückoberfläche ab. Zwischen t₂ und t₅ bleibt das Steuersignal 53 auf seinem maximalen Pegel, um nach dem Zeitpunkt t₅, zu dem das Steuersignal S2 wieder den Pegel Null angenommen hat, abzunehmen beginnt. bis der Pegel des Steuersignals S3 im Zeitpunkt t₆ auf Null abfällt. Nach dem Zeitpunkt t₆ gelangt kein Laserstrahl auf die Werkstückoberfläche, so daß keine Gravur erfolgt.

Durch Vergleich der Steuersignale S3 und S2 ist ersichtlich, daß das dem zweiten Laser 10 zugeführte zweite Steuersignal S2 nur dann "eingeschaltet" wird, wenn das Profil tiefer ist als eine gewisse Profiltiefe X in Fig. 2A). Folglich ist die für den zweiten Laser 10 benötigte "Modulationsfrequenz" geringer als die Modulationsfrequenz des akustooptischen Modulators 12. Der von letzterem Modulator 12 gelieferte Laserstrahl sorgt also für die Ausbildung der Feinkonturen. Dieser Ausgangs-laserstrahl des akustooptischen Modulators 12 könnte eine maximale Bearbeitungstiefe von T_{M} (siehe Fig. 2A) erreichen. Bei größeren Tiefen wird der zweite Laser 10 zugeschaltet.

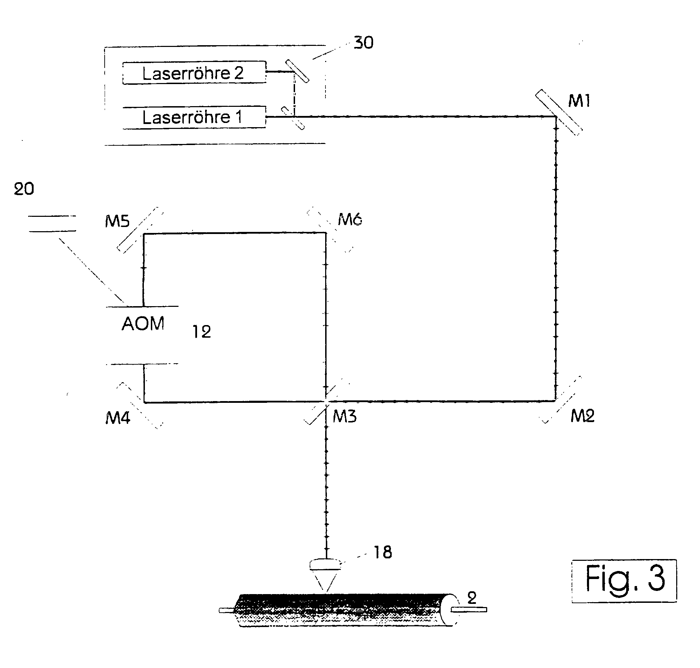

Fig. 3 zeigt eine weitere, spezielle Ausführungsform einer Lasergravuranlage. Während bei der Ausführungsform nach Fig. 1 grundsätzlich zwei getrennte Laser, beispielsweise zwei getrennte CO₂-Laser verwendet werden, ist gemäß Fig. 3 ein Laser 30 mit zwei Laserröhren vorgesehen, die jeweils linear polarisierte Laserstrahlung abgeben, wobei die beiden Polarisationsvektoren senkrecht aufeinander stehen. Am Ausgang des Lasers 30 tritt das Laserlicht mit zwei senkrecht aufeinanderstehenden Komponenten aus. Durch mehrmalige Umlenkung an Umlenkspiegeln M1, M2 gelangt dieses Licht auf einen selektiven Spiegel M3, der dem in Fig. 1 dargestellten Spiegel 14 entspricht. Die Strahlung mit der linearen Polarisation, die in Fig. 3 durch Punkte angedeutet ist, wird von dem Spiegel M3 auf die Optik 18 reflektiert. Die senkrecht dazu polarisierte Strahlung gelangt über einen weiteren Umlenkspiegel M4 auf den akustooptischen Modulator 12. Die dort austretende Laserstrahlung gelangt über weitere Umlenkspiegel M5, M6 durch den Spiegel M3 hindurch auf die Optik 18. Am Spiegel M5 erfolgt eine Ausblendung der Beugungsmaxima nullter Ordnung. Dieser Strahlungsanteil wird von einem Absorber 20 absorbiert. Das Beugungsmaximum erster Ordnung gelangt über die nachgeordneten Spiegel und die Optik 18 auf die Oberfläche des Werkstücks 2.

Die oben beschriebenen Ausführungsbeispiele lassen sich im Rahmen des Schutzumfangs der Erfindung modifizieren.

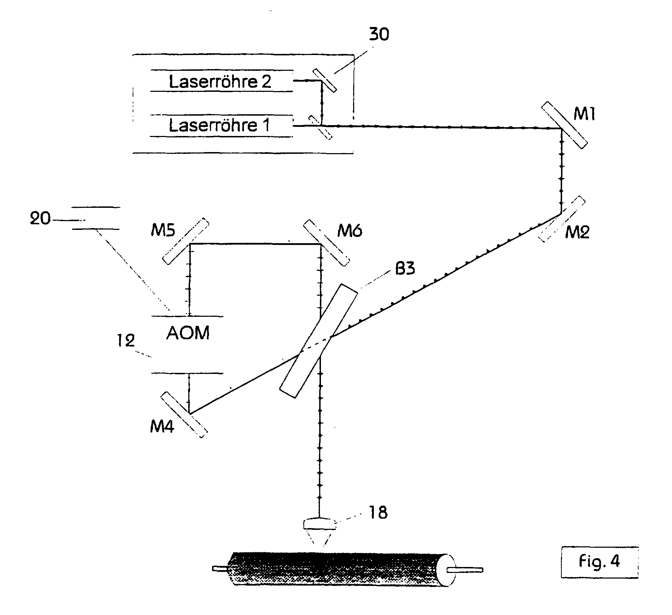

Anstelle des in Fig. 3 dargestellten Spiegels M3 kann auch bei etwas veränderter Geometrie der Strahlführung ein Brewsterfenster verwendet werden, wie dies in Fig. 4 bei B3 gezeigt ist.

Außerdem ist auch eine Überlagerung von zwei Laserstrahlen unterschiedlicher Wellenlängen mittels eines wellenlängenselektiven Spiegels möglich. Diese Ausführungsform ist in der Zeichnung nicht dargestellt. Man erkennt aber, daß bei dieser Ausführungsform die beiden Laserstrahlquellen Laserstrahlen unterschiedlicher Wellenlängen abgeben können.

Bei der Ausführungsform nach Fig. 1 ist ein akusto-optischer Modulator 12 dem ersten Laser 8 nachgeschaltet. Eine Modulation des Laserlichts läßt sich aber auch durch einen Laser mit Güteschalter erreichen. Dieser Güteschalter befindet sich - wie bekannt - im Resonator des Lasers.

## Patentansprüche

1. Lasergravuranlage (4) zum Gravieren einer Werkstückoberfläche (22) entsprechend einem Soll-Profil, mit einer ersten Laserstrahlquelle (8), einem im Strahlengang der ersten Laserstrahlquelle (8) liegenden Modulator (12), einer nachgeordneten Optik (18), die mit Abstand von der Werkstückoberfläche (22) angeordnet ist, wobei Optik (18) und Werkstück relativ zueinander bewegt werden, einer Steuereinrichtung (6), die den Modulator (12) mit einem ersten Steuersignal (S3) ansteuert, so daß dessen auf die Werkstückoberfläche (22) auftreffende Ausgangslaserstrahlung nach Maßgabe des ersten Steuersignals (S3) moduliert ist und die Werkstückoberfläche (22) entsprechend tief bearbeitet, und einer zweiten Laserstrahlquelle (10), die von der Steuereinrichtung (6) mit einem zweiten Steuersignal (S2) angesteuert wird,
**dadurch gekennzeichnet,** daß der Optik (18) eine Einrichtung (14; B3) vorgeschaltet ist, die die Ausgangslaserstrahlung der zweiten Laserstrahlquelle (10) mit der Ausgangslaserstrahlung des Modulators (12) auf eine gemeinsame Strahlachse zusammengeführt, und daß die Steuereinrichtung das erste und das zweite Steuersignal (S3, S2) derart erzeugt, daß das erste Steuersignal (S3) die Feinstrukturen des Soll-Profils definiert, und das zweite, der zweiten Laserstrahlquelle (10) zugeführte Steuersignal (S2) den tiefen Stellen des Profils entspricht.

2. Lasergravuranlage nach Anspruch 1,
**dadurch gekennzeichnet,**
daß die erste und die zweite Laserstrahlquelle (8, 10) jeweils linear polarisierte Strahlung mit etwa senkrecht aufeinanderstehenden Polarisationsvektoren abgeben, und daß die Ausgangslaserstrahlung des Modulators (12) und die Ausgangslaserstrahlung der zweiten Laserstrahlquelle (10) von verschiedenen Seiten auf einen selektiven Spiegel (14) oder ein Brewster-Fenster (B3) gegeben werden, so daß die transmittierte und die reflektierte Strahlung gemeinsam auf die Optik (18) gegeben werden.

3. Lasergravuranlage nach Anspruch 1,
**dadurch gekennzeichnet,**
daß die erste und die zweite Laserstrahlquelle Laserlicht unterschiedlicher Wellenlängen abgeben, und daß diese zwei Laserstrahlen über einen wellenlängenselektiven Spiegel auf die Optik gegeben werden.

4. Lasergravuranlage nach einem der Ansprüche 1 bis 3,
**dadurch gekennzeichnet,**
daß das erste Steuersignal (S3) und das zweite Steuersignal (S2) subtraktiv aus einem einzigen Steuersignal gewonnen werden, welches dem Soll-Profil der bearbeiteten Werkstückoberfläche (22) entspricht.

5. Lasergravuranlage nach einem der Ansprüche 1 bis 4,
**dadurch gekennzeichnet,**
daß der Modulator ein akusto-optischer Modulator (12) ist.

6. Lasergravuranlage nach einem der Ansprüche 1 bis 4,
**dadurch gekennzeichnet,**
daß der Modulator als Güteschalter der ersten Laserstrahlquelle (8) ausgebildet ist.

## Claims

1. A laser engraving machine (4) for engraving a workpiece surface (22) in accordance with a desired profile, having a first laser beam source (8), a modulator (12) in the beam path of the first laser beam source (8), a following optical system (18) spaced from the workpiece surface (22), the optical system (18) and the workpiece being moved relative to each other, a control device (6) which drives the modulator (12) with a first control signal (S3) so that its output laser radiation impinging on the workpiece surface (22) is modulated according to the first control signal (S3) and machines the workpiece surface (22) accordingly deeply, and a second laser beam source (10) which is driven by the control device (6) with a second control signal (S2), characterized in that the optical system (18) is preceded by a device (14; B3) which brings together the output laser radiation from the second laser beam source (10) with the output laser radiation from the modulator (12) on a common beam axis, and the control device generates the first and second control signals (S3, S2) such that the first control signal (S3) defines the fine structures of the desired profile while the second control signal (S2) supplied to the second laser beam source (10) corresponds to the deep places in the profile.

2. The laser engraving machine of claim 1, characterized in that the first and second laser beam sources (8, 10) each emit linearly polarized radiation with substantially perpendicular polarization vectors, and the output laser radiation from the modulator (12) and the output laser radiation from the second laser beam source (10) are applied to a selective mirror (14) or a Brewster window (B3) from different sides so that the transmitted and reflected radiation is applied commonly to the optical system (18).

3. The laser engraving machine of claim 1, characterized in that the first and second laser beam sources emit laser light with different wavelengths, and these two laser beams are applied to the optical system via a wavelength-selective mirror.

4. The laser engraving machine of any of claims 1 to 3, characterized in that the first control signal (S3) and the second control signal (S2) are gained subtractively from a single control signal which corresponds to the desired profile of the machined workpiece surface (22).

5. The laser engraving machine of any of claims 1 to 4, characterized in that the modulator is an acoustooptic modulator (12).

6. The laser engraving machine of any of claims 1 to 4, characterized in that the modulator is formed as a Q-switch of the first laser beam source (8).

## Revendications

1. Installation (4) de gravure au laser pour graver une surface (22) de pièce à graver correspondant à un profil de consigne, comprenant : une première source (8) de rayonnement laser, un modulateur (12) se trouvant sur le trajet de rayonnement de la première source (8) de rayonnement laser, une optique (18) disposée en aval et à distance de la surface (22) de la pièce à graver, l'optique (18) et la pièce à graver étant déplacées relativement l'une par rapport à l'autre, un organe de commande (6) qui commande le modulateur (12) avec un premier signal de commande (S3), de sorte que le rayonnement laser de sortie incident sur la surface (22) de la pièce à graver, soit modulé en fonction du premier signal de commande (S3) et que la surface (22) de la pièce à graver soit usinée à une profondeur correspondante, et une deuxième source (10) de rayonnement laser qui est commandée par l'organe de commande (6) avec un deuxième signal de commande (S2), caractérisée en ce que l'optique (18) est placée en amont d'un organe (14 ; B3) qui guide ensemble le rayonnement laser de sortie de la deuxième source (10) de rayonnement laser avec le rayonnement laser de sortie du modulateur (12) sur un axe de rayonnement commun, et en ce que l'organe de commande crée le premier et le deuxième signal de commande (S3, S2) de telle sorte que le premier signal de commande (S3) définisse les structures fines du profil de consigne, et que le deuxième signal de commande (S2) amené à la deuxième source (10) de rayonnement laser corresponde aux emplacements profonds du profil.

2. Installation de gravure au laser selon la revendication 1, caractérisée en ce que la première et la deuxième source (8, 10) de rayonnement laser fournissent chacune un rayonnement linéaire polarisé avec des vecteurs de polarisation sensiblement perpendiculaires et disposés l'un au-dessus de l'autre, et en ce que le rayonnement laser de sortie du modulateur (12) et le rayonnement laser de sortie de la deuxième source (10) de rayonnement laser sont fournis de différents côtés sur un miroir sélectif (14) ou sur une fenêtre de Brewster (B3) de sorte que le rayonnement transmis et le rayonnement réfléchi soient fournis ensemble à l'optique (18).

3. Installation de gravure au laser selon la revendication 1, caractérisée en ce que la première et la deuxième sources de rayonnement laser fournissent de la lumière laser présentant des longueurs d'onde différentes, et en ce que ces deux rayonnements lasers sont fournis à l'optique via un miroir sélecteur de longueurs d'onde.

4. Installation de gravure au laser selon l'une des revendications 1 à 3, caractérisée en ce que le premier signal de commande (S3) et le deuxième signal de commande (S2) sont obtenus par soustraction d'un signal de commande unique, qui correspond au profil de consigne de la surface (22) de la pièce à graver après la gravure de celle-ci.

5. Installation de gravure au laser selon l'une des revendications 1 à 4, caractérisée en ce que le modulateur est un modulateur (12) opto-acoustique.

6. Installation de gravure au laser selon l'une des revendications 1 à 4, caractérisée en ce que le modulateur est' réalisé comme le déclencheur de la première source (8) de rayonnement laser.
